# EUROPEAN PATENT SPECIFICATION

(11) **EP 3 614 020 B1**
(45) Date of publication and mention of the grant of the patent: **04.11.2020**
(21) Application number: 19192385.3
(22) Date of filing: 19.08.2019
(51) Int. Cl.: F16H 47/04, B61C 9/38, B61C 9/14, B61C 9/24

(54) **RAILWAY AXLE MOTOR ASSEMBLY WITH CONTINUOUS VARIATION, WITH ENERGY RECOVERY, AND RAILWAY WAGON**
EISENBAHNACHSMOTORANORDNUNG MIT KONTINUIERLICHER VARIATION MIT ENERGIERÜCKGEWINNUNG UND EISENBAHNWAGON
ENSEMBLE DE MOTEUR D'ESSIEU FERROVIAIRE AVEC VARIATION CONTINUE, RÉCUPÉRATION D'ÉNERGIE ET WAGON FERROVIAIRE

(30) Priority: 24.08.2018 IT 201800008176
(43) Date of publication of application: 26.02.2020
(73) Proprietor: SRT SOCIETA' A RESPONSABILITA' LIMITATA CON SOCIO UNICO, 00158 Roma (IT)
(72) Inventor: SALCICCIA, Gilberto, 00196 ROMA (IT)
(74) Representative: PGA S.p.A.

(56) References cited:
- EP-A1- 3 279 054
- EP-A2- 1 988 309
- CH-A- 376 739
- US-A1- 2017 167 580

## Description

### FIELD OF THE INVENTION

The object of the present invention is a railway axle motor assembly advantageously employable in the field of railway vehicles and a relative railway wagon employing said motor assembly.

### STATE OF THE ART

Presently, machines or vehicles are known with high delivered power values - such as railway wagons and operating machinery - which employ an endothermic traction in which, between the endothermic motor and the driven shaft connected to the wheels, a gearing is interposed. The gearing has the function of making a multiplication or reduction ratio between the number of revolutions of the motor and the number of revolutions of the driven shaft in order to allow the motor to operate at an operating speed as close as possible to its optimal rotation speed, and in a manner so as to reach the required acceleration or velocity objectives.

The gearings of known type generate a predetermined number of reduction ratios, tied to corresponding combinations of toothed gears present in the transmission itself. Such transmission type requires the mutual engagement of gear wheels which - in order to be engaged with and disengaged from each other - require a simultaneous disconnection from the normal mechanical power flow in order to prevent irreversible impact and damage of the wheels themselves. For such purpose, mechanical friction clutches are employed which however disadvantageously generate a dissipation of a part of the power transmitted thereby in transient engagement and disengagement conditions. In addition, the mechanical friction clutches are characterized by performances that worsen with the increase of the transmitted power, making them poorly suitable for machines and vehicles with high delivered power values. Still in relation to the use in applications where there are high exchanges of power as in the railway field, the mechanical friction clutches have reduced duration and insufficient reliability.

It is also underlined that the gearings are often governed by means of manual actuation, through the known "*gearshifts*"*.* Such manual actuation, if attained in an imprudent manner, would lead the machine to work at non-optimal operating speeds, i.e. at overly low or overly high operating speeds, and this would produce a reduction of the overall efficiency of the machine.

The use of transmissions of semi-hydrostatic type are also known; here, the endothermic motor is mechanically connected, by means of a reduction unit, to a driven shaft which is for example connected to drive wheels. The reduction unit has a gearing which can continuously vary with the variation of the machine speed. The variation of the gearing is obtained by means of a hydrostatic actuation which operates on the reduction unit. Disadvantageously, such transmissions of semi-hydrostatic type nevertheless require the use of a mechanical engagement gearing, generally installed downstream of the reduction unit, at least for the switching between a "*slow speed*", typical of an operation with heavy loads and at low speeds, and a "*fast speed*", typical of an operation without load or with low loads and at high speeds. This is due to the limited flexibility of the endothermic motor, which is directly and mechanically connected to the reduction unit and which, being a Diesel motor, has a very limited optimal range of operating speeds.

Without using the engagement gearing, the machine would have worsened efficiency, in particular in terms of maximum acceleration or velocity. In addition, the abovementioned switching between slow speed and fast speed would require the use of a mechanical friction clutch which would cause the previously described problems. Likewise, if the switching was actuated on a stopped vehicle, for example in order to insert the fast speed, the performances of the vehicle would be very considerably negatively affected upon acceleration since the vehicle, being stopped in order to engage the fast speed, would have to restart operation while stopped with a more disadvantageous gear ratio, the latter being associated with an optimal application at high speeds but absolutely not recommended for the starting, especially in considerable load conditions. The semi-hydrostatic transmissions of known type also have the further disadvantage of requiring complex structural expedients in order to attain the reversal of the drive sense, particularly tied to the need to provide for complex reversal members adapted to reverse the rotation sense of the driven shaft.

A further solution is described in the patent application EP1988309A2 intended for a transmission system for machines with endothermic traction. The system comprises a first and a second hydraulic motor connectable, by means of respective pumps, to an endothermic motor; each hydraulic motor is mechanically connected to a reduction unit which is connected - on the side opposite the hydraulic motors - to a driven shaft. The driven shaft is connected to a motion transmission axis carrying a pair of drive wheels of the machine. The reduction unit is spaced and distinct from the motion transmission axis by means of the driven shaft which is interposed between reduction unit and the transmission axis.

The reduction unit is configured for varying, continuously and along an entire machine operating range, the gear ratio between the number of revolutions of the endothermic motor and the number of revolutions of said drive wheels. The system also comprises adjusting means acting on the reduction unit in order to continuously vary the gear ratio along the entire operating range of the traction machine.

The latter solution, with respect to the above-described state of the art, allows the continuous switching between slow speed and fast speed without the aid of mechanical friction clutches and without requiring stopping the vehicle. Even if the solution described in the patent application EP1988309A2 is improved with respect to the preceding state of the art, the Applicant also detected that the latter solution does not lack limitations and drawbacks. Indeed, the transmission system described in the application EP1988309A2 has a complex and bulky structure which complicates the steps of installation, maintenance and possible substitution of the same. It is also indicated that the complex structure has a significant negative impact on the overall mechanical performance of the transmission, which reduces the mechanical power transferable by the endothermic motor to the drive wheels.

A further solution is described in the patent application EP3279054A1 intended for a railway motor assembly comprising an epicycloidal transmission system connected with a first and a second motor that are adapted to determine the rotation respectively of an external ring gear and of a planetary carrier of the epicycloidal transmission. With respect to the abovementioned prior art documents, the transmission system described in the patent application EP3279054A1 allows varying, continuously and along an entire machine operating range, the gear ratio between the number of revolutions of the motors and the number of revolutions of a driven shaft integral with a pair of drive wheels.

### OBJECT OF THE INVENTION

The object of the present invention is therefore that of substantially resolving at least one of the drawbacks and/or limitations of the preceding solutions.

A first objective of the present invention is to provide a motor assembly for a railway axle of railway wagons, which has a high overall efficiency and simultaneously has high reliability. Another object of the present invention is to provide a motor assembly for railway wagons that is structurally simple and inexpensive. Another objective of the present invention is to provide a motor assembly having a reduced bulk, which can allow the mounting thereof on many different machine types, and which can facilitate maintenance and substitution operations thereof; in particular, one object of the present invention is to allow the use of motors with reduced power and hence which are extremely compact and inexpensive. Another object of the present invention is to provide a motor assembly for railway wagons which has a high flexibility of use, particularly for a wide range of operating speeds; another object of the invention is to provide a motor assembly which is capable of bringing the motor - e.g. of the railway wagon - to operate at a speed and with a load that are close to optimal values, both during an acceleration condition and during speed maintenance. Another of the present invention is to provide a motor assembly for railway wagons which allows a continuous variation of the gear ratio, at least within a specific interval of the latter.

These objects and still others, which will be clearer from the following description, are substantially achieved by a motor assembly for railway axle and a relative railway wagon in accordance with the appended claims.

### BRIEF DESCRIPTION OF THE DRAWINGS

Several embodiments of the invention will be described hereinbelow with reference to the enclosed drawings, provided merely as a nonlimiting example, wherein:
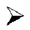 Figures 1 and 2 are perspective views of a motor assembly in accordance with the present invention;
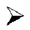 Figure 3 is an exploded schematic view of a railway axle motor assembly in accordance with the present invention;
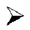 Figure 4 is a detailed longitudinal section view of a railway axle motor assembly in accordance with the present invention;
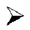 Figures 5 to 7 are respective schematizations of different embodiments of a railway axle motor assembly in accordance with the present invention;
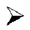 Figure 8 is a perspective view of a railway wagon comprising at least one railway axle motor assembly in accordance with the present invention.

### DEFINITIONS AND CONVENTIONS

It is observed that in the present detailed description corresponding parts illustrated in the various figures are indicated with the same numerical references.

The figures could illustrate the object of the invention by means of representations that are not in scale; hence, parts and components illustrated in the figures relative to the object of the invention might exclusively regard schematic representations.

With the term actuation of hydraulic type it is intended an actuation which translates into a mechanical action, for example that can be generated by an endothermic motor, in conferring a pressure value to a working fluid: such pressure value is then translated into a further mechanical action by means of a hydraulic motor.

With the term working fluid it is intended any one material at least partly in liquid state, adapted to transmit high pressures, typical of a use in power actuations, such as actuations in the traction field. Preferably, such fluid is oil.

### DETAILED DESCRIPTION

### Railway axle motor assembly

Reference number 1 overall indicates a railway axle motor assembly employable in the field of railway vehicles.

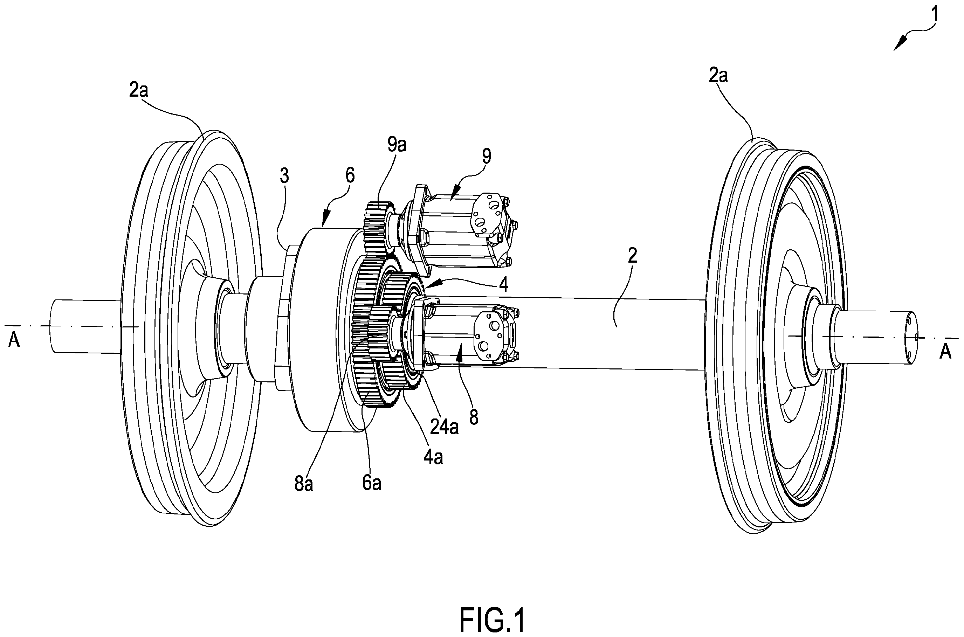

The motor assembly 1 comprises an axle 2 extended along an extension direction between a first and a second longitudinal end portion at which the axle 2 carries at least one drive wheel 2a. In the embodiment shown in figure 1, the axle carries a first and a second drive wheel. The axle 2 and the drive wheels are configured for rotating around an axis A (figure 1); axle and drive wheels have a circular section and are placed concentrically with respect to each other: axle and drive wheels have a coinciding axis of symmetry which coincides with the axis A. The axle 2 can nevertheless comprise only one drive wheel: such embodiment variant is suitable for so-called monorail railway transport systems.

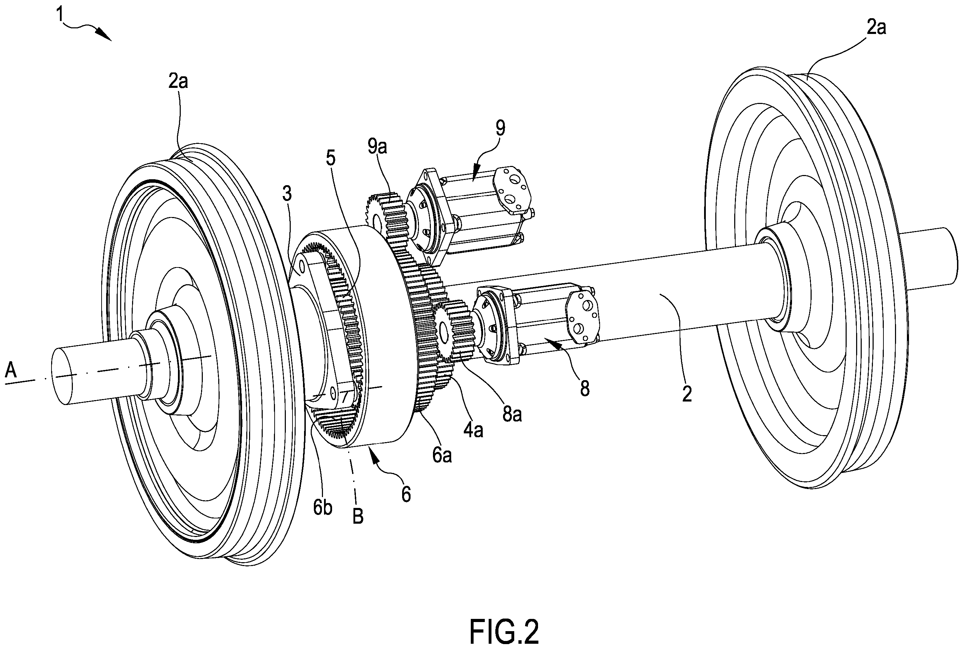

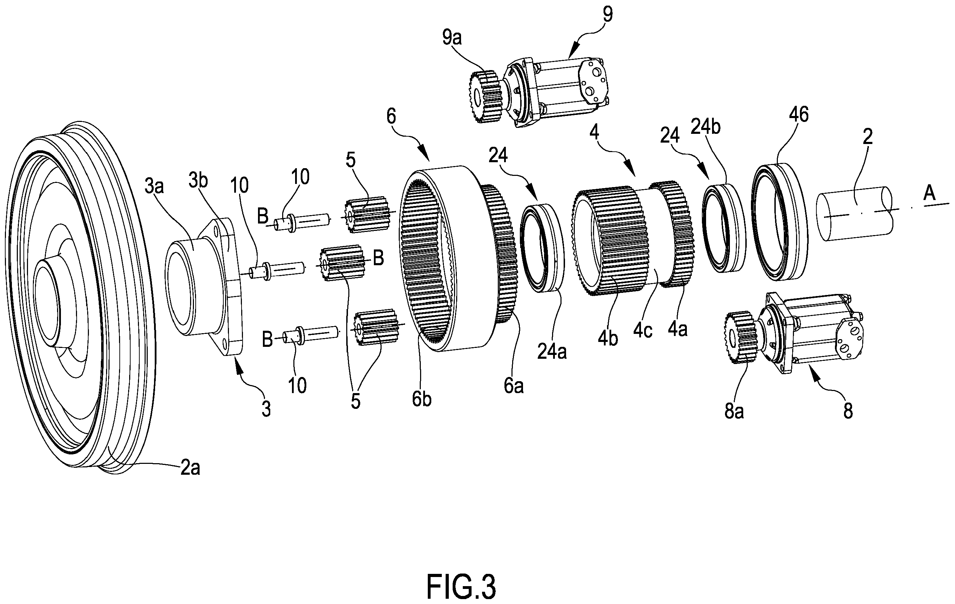

The motor assembly comprises a planetary carrier 3 (figures 1-4) fitted and integral with the axle 2 in a manner such that the same can rotate together with the latter around the same axis A: the planetary carrier 3 is stably fixed to the axle 2 for example by means of an interference system or by means of the interposition of a key (also termed *cotter pin*). For example, the planetary carrier 3 is arranged in proximity to a drive wheel 2a placed at the first longitudinal end portion, in axial interposition between the first and the second drive wheel 2a. Alternatively, the planetary carrier 3 can be arranged at a center line zone between the first and the second drive wheel. The planetary carrier 3, for more clarity shown in the exploded view of figure 3, comprises a first cylindrical portion 3a integrally joined to a second portion 3b defined by a plate having substantially triangular shape, in particular substantially trefoil shape; at each corner portion, or at each lobe, of the second portion a connection element 10 is fixed comprising a pin (figure 3); each connection element 10 emerges from the second portion 3b along an axis B parallel to the rotation axis A of the axle. Each connection element 10 emerges from the second portion 3b (plate) on the side opposite the first portion 3a. The planetary carrier 3 is made of metallic material, preferably made of steel.

The motor assembly 1 also comprises a first actuating wheel 4 radially constrained to the axle 2 and movable around the axis A relative to the same axle 2, and consequently movable by rotation relative to the planetary carrier 3: the first actuating wheel 4 is constrained radially and axially to the axle 2 in a manner such that the actuating wheel 4 has a single degree of rotational freedom with respect to the axle 2. The first actuating wheel 4 is mounted concentric to the axle 2: the actuating wheel 4 has a center arranged on the rotation axis A of the axle 2.

The first actuating wheel 4 comprises at least one coupling portion 4a, shown in figures 1 to 4, actuatable by a first motor 8 configured to rotate the first actuating wheel 4. In detail, the coupling portion 4a is a gear wheel with external toothing, preferably with straight teeth. Alternatively the coupling portion 4a could have a helical toothing.

The actuating wheel 4 also comprises a gear wheel 4b (a second gear wheel) integral with and spaced axially along the rotation axis A of the axle 2 with respect to coupling portion 4a (first gear wheel of the wheel 4) of the first actuating wheel 4. Optionally, the nominal diameter of the gear wheel 4b is similar, optionally substantially identical, to the nominal diameter of the coupling portion 4a (gear wheel 4a).

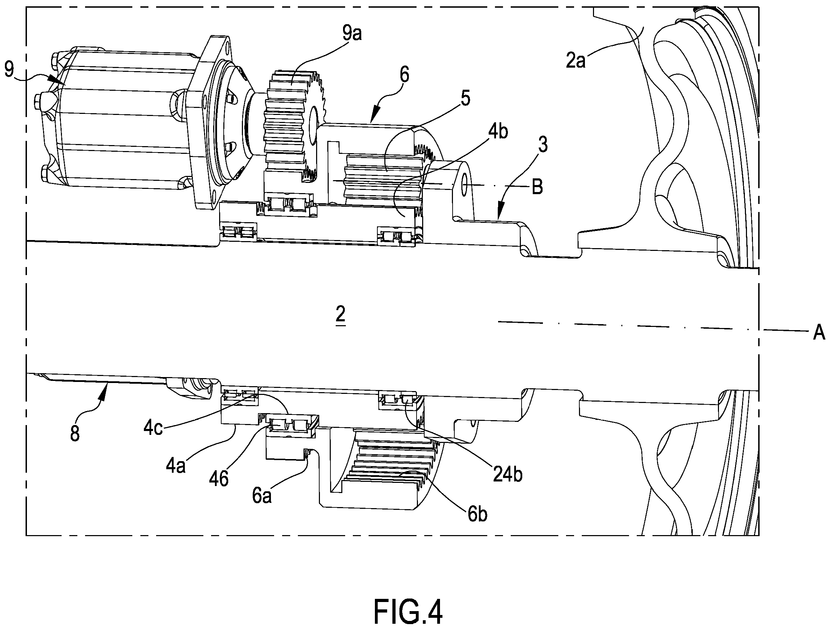

The first actuating wheel 4 is constrained radially, and optionally axially, to the axle 2 by means of a first and a second radial bearing 24a, 24b as shown in the exploded view of figure 3 and in the sectional view of figure 4. In accordance with the preferred embodiment, the first radial bearing 24a is radially interposed between the coupling portion 4a and the axle 2, while the second radial bearing 24b is radially interposed between the gear wheel 4b and the axle 2. The first and the second bearing 24a, 24b allow the relative rotation between the first actuating wheel 4 and the axle 2, and consequently between the first actuating wheel 4 and the planetary carrier 3.

As specified above, the coupling portion 4a and the gear wheel 4b are spaced from each other; in more detail, coupling portion 4a and gear wheel 4b are axially separate from each other by means of the interposition of an engagement surface 4c having cylindrical shape and a maximum external diameter smaller than the nominal diameter of the coupling portion 4c and/or of the gear wheel 4b. As will be better described hereinbelow, such surface 4c is configured for externally carrying at least one radial bearing 46, optionally of axial-radial type hence configured for sustaining radial and axial loads. Also the first actuating wheel 4 is advantageously made of metal material, preferably of steel.

As mentioned above, the motor assembly 1 comprises at least one first motor 8 having at least one pinion 8a, shown in figures 1 to 4, engaged via meshing with the external gear wheel of the coupling portion 4a of the first actuating wheel 4.

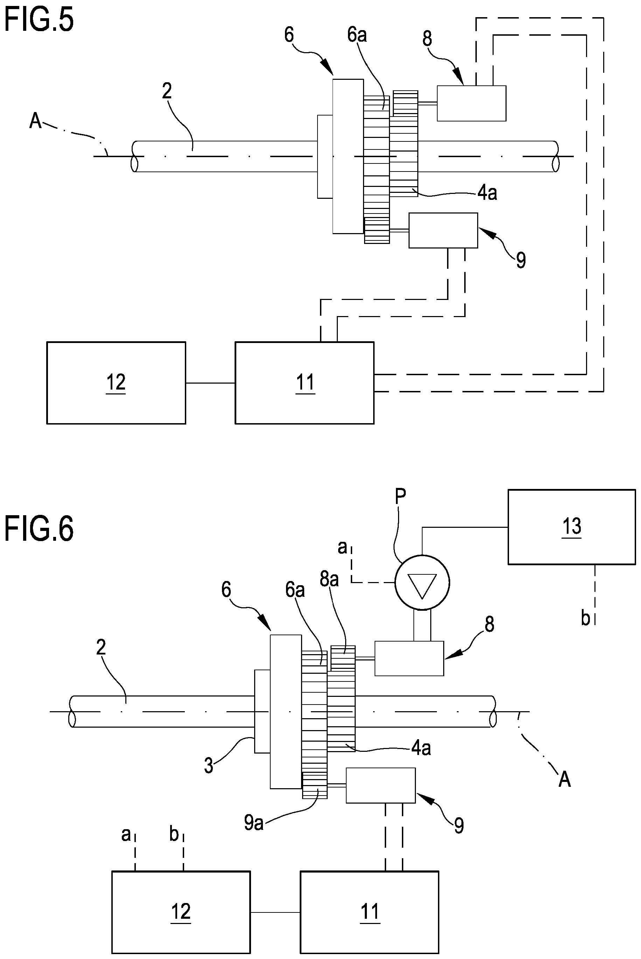

The pinion 8a is directly fitted on a rotation shaft of the first motor 8. Alternatively, the first motor 8 can be connected to the coupling portion 4a by means of a toothed transmission belt. In a preferred embodiment of the invention, the first motor 8 comprises an electric motor connected to and power supplied by a battery or current generator 11, as shown in figures 5 and 6.

The motor assembly 1 also comprises at least one second actuating wheel 6 (see figures 1 to 4) distinct from the first actuating wheel 4 and also constrained at least radially to the axle 2. In detail, the second actuating wheel 6 is concentrically mounted on the first actuating wheel 4 and on the axle 2. In still more detail, the second actuating wheel 6 is fitted on the radial bearing 46 carried by the first actuating wheel 4, in a manner such that the first and the second actuating wheel 4, 6 can rotate relative to each other. Consequently, the actuating wheel 6 is movable by rotation relative to the planetary carrier 3. The first and the second actuating wheels 4, 6 are concentric to the axle 2 and movable by rotation around the axis A.

The second actuating wheel 6 comprises at least one coupling portion 6a actuatable by a second motor 9 configured to rotate the second actuating wheel 6.

The radial bearing 46 is radially interposed between the engagement surface 4c of the first actuating wheel 4 and the coupling portion 6a of the second actuating wheel 6: the bearing 46 placed under the coupling portion 6a is capable of suitably sustaining said portion 6a which, as mentioned above, directly receives the load from the second motor. The coupling portion 6a is also interposed axially, hence along the rotation axis A of the axle 2, between the gear wheel 4b and the coupling portion 4a of the first actuating wheel 4 (figure 4). The coupling portion 6a of the second actuating wheel 6 is a gear wheel with external toothing, preferably with straight teeth. Alternatively, the gear wheel of the coupling portion 6a could have a helical toothing. Since the coupling portion 6a is radially placed outside the first wheel 4, said portion 6a has a nominal diameter greater than the gear wheel 4a and, optionally, of the gear wheel 4b. Analogously, the gear wheel 6b of the second actuating wheel 6 has a nominal diameter greater than the nominal diameter of the gear wheel 4b of the first actuating wheel 4.

The second actuating wheel 6 comprises a gear wheel 6b, integral with the coupling portion 6a of the second actuating wheel 6. In more detail, the gear wheel 6b of the second actuating wheel 6 is of the type with internal toothing facing the axle 2. As is visible in figure 4, the gear wheel 6b delimits a space within which at least part of the gear wheel 4b of the first actuating wheel 4 and at least part of the connection elements 10 are housed. Consequently, the gear wheel 6b of the second actuating wheel 6 faces the gear wheel 4b and is radially spaced with respect to the latter. The gear wheel 6b of the second actuating wheel 6 has a nominal diameter greater than the nominal diameter of the coupling portion 6a, and consequently greater than the nominal diameter of the gear wheels 4a and 4b of the first actuating wheel 4. In a preferred embodiment, the second actuating wheel 6 is made of metal material, preferably of steel.

As mentioned above, the motor assembly 1 comprises a second motor 9 active on the second coupling portion 6a of the second actuating wheel 6. The second motor 9 comprises at least one pinion 9a engaged via meshing with the external gear wheel of the coupling portion 6a of the second actuating wheel 6. The pinion 9a is directly fitted on a rotation shaft of the second motor 9; furthermore the driver shaft can have a groove housing a key and configured for constraining the rotation of the drive shaft to the pinion 9a. Alternatively, the second motor 9 is connected to the coupling portion 6a of the second actuating wheel 6 by means of a toothed transmission belt.

The second motor 9 comprises an electric motor connected to and power supplied by a battery or by a current generator 11, as shown in figures 5 and 6. In an embodiment illustrated in figures 4 and 5, the first and the second motor both comprise an electric motor: each motor is power supplied by the battery or current generator 11.

The motor assembly 1 also comprises at least one toothed planetary gear 5 carried by the planetary carrier 3. The planetary gear 5 is directly engaged with the connection element 10 of the planetary carrier 3 and movable by rotation with respect to said element around the axis B spaced from the axis A. In detail, the planetary gear 5 is constrained to the respective connection element 10 by means of at least one bearing (not shown in the enclosed figures), optionally a radial bearing or an axial-radial bearing. The planetary gear 5 is therefore movable by rotation around the axis A of the axle 2 and, simultaneously, movable by rotation around the axis B passing through the geometric center of the planetary gear 5 itself, wherein the axis B is distinct, spaced from and parallel to the rotation axis A of the axle 2. The planetary gear 5 therefore has a center spaced from the axis A of the axle 2 and coinciding with the rotation axis B of the planetary gear 5 itself (axial extension axis of the connection element 10).

The motor assembly 1 can comprise a plurality of planetary gears 5 angularly equidistant from each other, and each of these is carried by a respective connection element 10 and hence movable by rotation with respect to respective axes B that are parallel to each other and parallel to the axis A. In more detail, the motor assembly comprises a number of planetary gears equal to or greater than 2, optionally comprised between 2 and 6. In figure 3, an embodiment of the motor assembly is illustrated having 3 planetary gears 5.

The planetary gears 5, having a toothing with straight or helical teeth, are housed in the space defined by the second actuating wheel 6 and radially interposed between the gear wheel 4b of the first actuating wheel 4 and the gear wheel 6b of the second actuating wheel 6. The planetary gear 5 (each planetary gear 5) simultaneously meshes the gear wheels 4b, 6b of the first and second actuating wheels 4, 6. The planetary gear contacts and operates directly on the gear wheel 4b and on the gear wheel 6b.

The motor assembly 1 defines, in other words, a motorized mechanical transmission having two degrees of rotational freedom: a first rotational degree of freedom associated with the first actuating wheel 4 and a second rotational degree of freedom associated with the second actuating wheel 6. Consequently, in a first operating condition in which the first actuating wheel 4 is maintained stopped by the first motor 8 (zero absolute angular velocity), the second actuating wheel 6 is moved by the second motor 9 so as to transmit the motion to the axle 2 and then to the drive wheels 2a. Analogously, in a second operating condition in which the second actuating wheel 6 is maintained stopped by the second motor 9 (zero absolute angular velocity), the first actuating wheel 4 is moved by the first motor 8 so as to transmit the motion to the axle 2 and then to the drive wheels 2a. Said first and second operating conditions define, in accordance with the geometric sizes of the gear wheels involved, two different values of the gear ratios, each selectable as a function of the use conditions; each ratio is selectable so as to optimize the acceleration conditions, the maximum velocity of the axle 2, the operating cost and efficiency. It is observed that, in each of said first and second operating conditions, the mechanical transmission defines a speed reducer, wherein the rotation speed of the axle 2 is lower than the rotation speed respectively - in the first operating condition - of the second actuating wheel 6 and of the first actuating wheel 6, 4. Further values of the gear ratio can be obtained by varying the ratio between the angular speeds of the first and second motors 8, 9, actually obtaining a continuously-varying speed change.

The motor assembly 1 also comprises a control unit 12 connected to the battery or current generator 11 and configured for commanding the latter (element 11) to send electrical energy to the first and to the second motor 8, 9 in order to allow the activation thereof. The control unit 12 is also advantageously connected to each electric motor 8, 9 and is configured at least to:
- detect the operating condition of each motor or detect if each motor 8, 9 is in a stopped state (stopped rotation shaft) or if each motor is in an active state in which the rotation shaft is moving,
- detect, for each motor, an angular velocity of the drive shaft and hence the angular velocity of the respective pinion 8a, 9a,
- control the angular velocity of each motor so as to command the angular velocity of the first and second actuating wheels 4, 6 and consequently the rotation speed of the axle around the axis A.

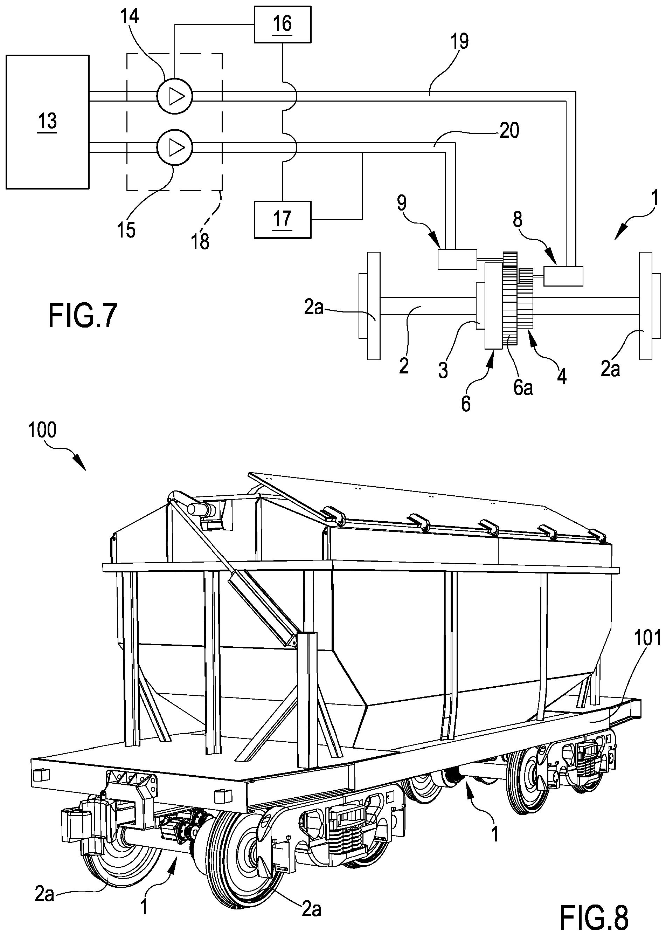

Figure 7 illustrates an embodiment variant of the invention in which the motor assembly 1 comprises a first portion 18 connected to an endothermic motor 13, e.g. a motor with Diesel or Otto cycle, and connected, as will be better described hereinbelow, to at least one hydraulic motor which is directly active on the first or second actuating wheel 4, 6. In more detail, the first portion 18 comprises a first hydraulic pump 14, mechanically connected to the endothermic motor 13 in order to receive mechanical power from the same and transfer at least one part of such power to a working fluid. The first hydraulic pump 14 is preferably directly connected to the endothermic motor 13, and still more preferably is stably connected to the endothermic motor itself, for example to flanged portions or friction clutches specially made on the endothermic motor. In the particular case of application on a railway machine, the first portion 18 of the motor assembly 1 is installed on the case of the machine itself, on which the endothermic motor 13 is also housed. The motor assembly 1 (embodiment variant of figure 7) comprises an actuation unit of hydraulic type, preferably hydrostatic, which is mechanically connected to the endothermic motor 13 in order to receive power from the latter and transmit at least one part of such power to one or more of the abovementioned actuating wheels. In particular, the hydraulic actuation unit comprises a first motor 8 of hydraulic type, placed in fluid communication with the abovementioned first hydraulic pump 14 in order to receive, in inlet, a driving power from the abovementioned working fluid and transfer a part of such driving power to the first actuating wheel 4 and consequently to the drive wheels 2a. In accordance with that already mentioned above, the fluid communication between the first hydraulic pump 14 and the first hydraulic motor 8 occurs by means of one or more first ducts 19 of the type adapted to convey a fluid under pressure. More preferably, the first hydraulic pump 14 and the first hydraulic motor 8 are exclusively connected by means of such fluid communication. The first hydraulic pump 14 is preferably a piston pump, optionally a variable displacement pump.

The latter condition results in a possibility to vary in a regulated manner at least one flow rate of the working fluid delivered by the hydraulic pump 14 itself, in such a manner that power transmitted to the corresponding first hydraulic motor 8 and then to the drive wheels 2a can be varied. Also the first hydraulic motor 8 is of piston type, preferably of variable displacement type. The duct 19 can have one or more throttle valves, not shown in the enclosed figures, configured for varying the flow rate and/or the pressure of the working fluid sent to the first hydraulic motor 8.

Said valves are connected to the control unit 12, wherein the latter is configured for commanding the opening or the closing thereof at least as a function of the rotation speed of the first and of the second motor, as well as a function of the use conditions.

As is visible still in figure 7, the motor assembly 1 comprises a second hydraulic pump 15 and a second motor 9 of hydraulic type: the second hydraulic motor 9 is directly active on the second actuating wheel 6 by means of a gear wheel. Both the second hydraulic pump 15 and the second hydraulic motor 9 can be of piston type, and at least one of these is of variable displacement type as a function of power to be transmitted. The second hydraulic pump 15 can be directly connected to the endothermic motor 13, in particular to the abovementioned flanged portions of the endothermic motor itself. In accordance with figure 7, the second hydraulic pump 15 is part of the first portion 18, and in case of application on a railway machine the second hydraulic pump 15 is then supported on the case of the railway machine. On the contrary, the second hydraulic motor 9 is mechanically and directly fixed at the axle 2 in a manner such that the same motor can directly be active on the second actuating wheel 6. The operating connection between the second hydraulic pump 15 and the second hydraulic motor 9, i.e. the exchange of power between the same, is exclusively obtained by means of fluid communication, and in particular through one or more second ducts 20 of the type adapted to circulate a fluid at high pressures.

Alternatively, the duct 20 has one or more throttle valves, not shown in the enclosed figures, configured for varying the flow rate and/or the pressure of the working fluid sent to the second hydraulic motor 9. Said throttle valves can be connected to the control unit 12, wherein the latter is configured for controlling the opening or closing thereof at least as a function of the rotation speed of the first and of the second motor, additionally as a function of the use conditions. In other words, in the embodiment of figure 7, the electric motors 8 and 9 have thus been substituted by the hydraulic motors 8 and 9, wherein each hydraulic motor is directly connected (active) on the respective first and second actuating wheel 4 and 6. In a further embodiment variant illustrated in figure 6, the motor assembly 1 comprises a first hydraulic motor 8 active on the first actuating wheel 4 and connected to a hydraulic pump P, the latter connected to an endothermic motor 13, in accordance with the above-described embodiment scheme. The second motor 9 is instead of electric type and is connected on one side to the battery or current generator 11 and on the other side is directly connected to the second actuating wheel 6.

### Railway wagon

Also forming the object of the present invention is a railway wagon 100 comprising at least one motor assembly 1 in accordance with the above-reported description and/or in accordance with any one of the enclosed claims. The wagon 100 comprises at least one frame 101 engaged with the motor assembly 1 adapted to define the load and support structure of the wagon. The frame 101 is constrained - in use conditions of the wagon 100 - above the motor assembly 1.

The wagon comprises at least two movement systems 1, both constrained to the frame 101 and spaced one with respect to the other from the same frame 101 along a longitudinal extension direction of the wagon 100 (see figure 8 merely as an example); in other words, the motor assemblies 1 are connected to each other by the frame 101: the frame 101 is configured for maintaining the movement systems 1 at a predetermined and fixed distance from each other during the sliding of the wagon on the tracks. In figure 8, a railway wagon 100 has been schematized, having four axles of which two comprise the motor assembly 1; nevertheless, it might also be possible to make a wagon having only two axles or more than four axles. In addition, it might also be possible to make a wagon where each axle comprises the motor assembly 1 (all axles motorized) or make a wagon 100 having only one motor assembly 1 (only one motorized axle).

### ADVANTAGES OF THE INVENTION

The present invention attains the proposed objects, overcoming the drawbacks lamented in the prior art. The presence of a motor assembly 1 free of mechanical engagement members such as mechanical friction clutches and gear engagements allows high reliability, particularly tied to the absence of the mechanical friction clutches whose use in high power applications has proven to be inconvenient, at least from an economic standpoint. The absence of the mechanical friction clutches and of gear engagements allows improving the overall efficiency of the machine, since the friction clutch is already a considerable source of energy dissipation during engagement and disengagement and during starting.

It should also be indicated that the members adapted to transmit the mechanical power of the motors to the drive wheels R are directly constrained to the axle; this configuration allows obtaining a motor assembly 1 that is extremely compact and easy to install, which also allows maximizing the mechanical power transmission efficiency.

In addition, the presence of a reduction unit adapted to generate a gear ratio that is continuously variable along the entire operating range of the machine allows increasing the energy efficiency of the motors, since it allows setting an optimal rotation speed for the motors with the increase of the railway wagon speed.

Furthermore, the present invention, if compared with the abovementioned prior art, described in the patent document EP3279054A1, allows obtaining a higher reduction ratio, in particular it allows a reduction of the rotation speed of the drive wheels with respect to the rotation speed of the motors and consequently a higher multiplication of the torque at the wheels. In more detail, the present invention allows, by virtue of the higher reduction ratio, the use of electric or hydraulic motors of small size having reduced drive torques and high maximum rotation speeds: this allows reducing the size of the motor assembly as well as limiting the costs of the motors themselves. It is in fact known that small-size motors, characterized by low drive torques and high rotation speed, are less expensive than motors designed for delivering high drive torques at low rotation speed. Furthermore, the use of small-size motors allows a reduction of the overall weight of the motor assembly, improving the performances of the motor assembly itself in terms of maximum velocity and acceleration.

## Claims

1. Motor assembly for railway axle (100) comprising:
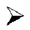 an axle (2) comprising at least one drive wheel (2a) configured to rotate together with said axle (2) around an axis (A),
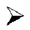 a planetary carrier (3) fitted on the axle (2),
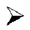 at least one toothed planetary gear (5) carried by the planetary carrier (3) and movable by rotation with respect to the latter at least around a respective axis (B) distinct from the rotation axis (A) of the axle (2),
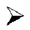 a first actuating wheel (4) constrained to the axle (2) and movable by rotation relative to the latter around the rotation axis (A) of the axle (2), said first actuating wheel (4) having:
∘ a coupling portion (4a) actuatable by a first motor (8) configured to rotate said first actuating wheel (4),
∘ a gear wheel (4b) integral with said coupling portion (4a) and engaged via meshing with the planetary gear (5),
∘ an engagement surface (4c) interposed between the coupling portion (4a) and the gear wheel (4b) of the first actuating wheel (4) according to a direction parallel to the axis (A) of the axle (2),
a second actuating wheel (6) - distinct from the first actuating wheel (4) - constrained to the axle (2) and movable by rotation relative to the latter around the axis (A) of the axle (2),
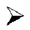 the second actuating wheel (6) having:
∘ a coupling portion (6a) actuatable by a second motor (9) configured to rotate said second actuating wheel (6),
∘ a gear wheel (6b) integral with said coupling portion (6a) of the second actuating wheel (6), and engaged via meshing with the planetary gear (5),
wherein the planetary gear (5) is radially interposed between the gear wheels (4b, 6b) respectively of the first and second actuating wheels (4, 6),
wherein the second actuating wheel (6) is constrained to the first actuating wheel (4) by means of at least one radial bearing (46),
wherein the engagement surface (4c) of the first actuating element (4) externally carrying said at least one radial bearing (46) constraining the first and the second actuating wheel.

2. Motor assembly according to the preceding claim, wherein the first actuating wheel (4) is concentric to the second actuating wheel (6), the gear wheels (4b, 6b) of the first and second actuating wheels (4, 6) being radially spaced from each other, optionally the second actuating wheel is radially external with respect to the first actuating wheel (4) and carried by the latter.

3. Motor assembly according to any one of the preceding claims, wherein the first actuating wheel (4) is constrained radially, and optionally axially, to the axle (2) by means of at least one radial bearing (24),
wherein said first actuating wheel (4) is rotatable with respect to the planetary carrier (3) around the axis (A) of the axle (2).

4. Motor assembly according to any one of the preceding claims, wherein the first actuating wheel (4) is constrained radially, and optionally axially, to the axle (2) by means of a first and a second radial bearing (24a, 24b),
wherein said first radial bearing (24a) is radially interposed between the coupling portion (4a) of the first actuating wheel (4) and the axle (2),
wherein said second radial bearing (24b) is radially interposed between the gear wheel (4b) of the first actuating wheel (4) and the axle (2).

5. Motor assembly according to any one of the preceding claims, wherein the first actuating wheel (4) is radially interposed between the axle (2) and the planetary gear (5).

6. Motor assembly according to any one of the preceding claims, wherein the coupling portion (4a) of the first actuating wheel (4) is an external gear wheel, optionally with straight teeth.

7. Motor assembly according to any one of the preceding claims, wherein the second actuating wheel (6) is movable by rotation relative to the planetary carrier (3) and to the first actuating wheel (4).

8. Motor assembly according to any one of the preceding claims, wherein said radial bearing (46) is radially interposed between the engagement surface (4c) of the first actuating wheel (4) and the coupling portion (6a) of the second actuating wheel (6).

9. Motor assembly according to any one of the preceding claims, wherein the coupling portion (6a) of the second actuating wheel (6) is an external gear wheel, optionally with straight teeth.

10. Motor assembly according to any one of the preceding claims, wherein the gear wheel (6b) of the second actuating wheel (6) comprises a gear wheel with internal toothing, whose toothing faces the axle (2).

11. Motor assembly according to the preceding claim, wherein the gear wheel (6b) of the second actuating wheel (6) delimits a space within which the at least one planetary gear (5) and at least part of the gear wheel (4b) of the first actuating wheel (4) are housed.

12. Motor assembly according to any one of the preceding claims, wherein the at least one planetary gear (5) laterally projects from the planetary carrier (3) which is axially spaced from the first and from the second actuating wheel (4, 6).

13. Railway wagon (100) comprising:
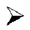 at least one motor assembly for railway axle (1) in accordance with any one of the preceding claims, the drive wheel of the motor assembly (1) being configured for abutting against at least one railway track,
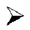 at least one frame (101) engaged with the motor assembly (1) adapted to define the load and support structure of the wagon.

## Patentansprüche

1. Motoranordnung für eine Schienen-Achse (100), umfassend:
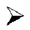 eine Achse (2), umfassend wenigstens ein Antriebsrad (2a), welches dazu eingerichtet ist, sich zusammen mit der Achse (2) um eine Achse (A) zu drehen,
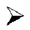 einen Planetenträger (3), welcher an der Achse (2) eingepasst ist,
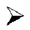 wenigstens ein verzahntes Planetenrad (5), welches durch den Planetenträger (3) getragen ist und durch Drehung in Bezug auf den letzteren wenigstens um eine entsprechende Achse (B) bewegbar ist, welche sich von der Drehachse (A) der Achse (2) unterscheidet,
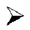 ein erstes Betätigungsrad (4), welches mit der Achse (2) in Zwangsverbindung steht und durch Drehung relativ zu der letzteren um die Drehachse (A) der Achse (2) bewegbar ist, wobei das erste Betätigungsrad (4) aufweist:
∘ einen Kopplungsabschnitt (4a), welcher durch einen ersten Motor (8) betätigbar ist, welcher dazu eingerichtet ist, das erste Betätigungsrad (4) zu drehen,
∘ ein Zahnrad (4b), welches integral mit dem Kopplungsabschnitt (4a) ist und über ein Eingreifen mit dem Planetenrad (5) in Eingriff gebracht ist,
∘ eine Eingriffsfläche (4c), welche zwischen dem Kopplungsabschnitt (4a) und dem Zahnrad (4b) des ersten Betätigungsrads (4) gemäß einer zu der Achse (A) der Achse (2) parallelen Richtung eingefügt ist,
ein zweites Betätigungsrad (6) - von dem ersten Betätigungsrad (4) verschieden -, welches mit der Achse (2) in Zwangsverbindung steht und durch Drehung relativ zu der letzteren um die Achse (A) der Achse (2) bewegbar ist,
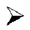 wobei das zweite Betätigungsrad (6) aufweist:
∘ einen Kopplungsabschnitt (6a), welcher durch einen zweiten Motor (9) betätigbar ist, welcher dazu eingerichtet ist, das zweite Betätigungsrad (6) zu drehen,
∘ ein Zahnrad (6b), welches integral mit dem Kopplungsabschnitt (6a) des zweiten Betätigungsrads (6) ist und über ein Eingreifen mit dem Planetenrad (5) in Eingriff gebracht ist,
wobei das Planetenrad (5) radial zwischen den Zahnrädern (4b, 6b) des ersten bzw. des zweiten Betätigungsrads (4, 6) eingefügt ist,
wobei das zweite Betätigungsrad (6) mittels wenigstens eines Radiallagers (46) mit dem ersten Betätigungsgrad (4) in Zwangsverbindung steht,
wobei die Eingriffsfläche (4c) des ersten Betätigungselements (4) das wenigstens eine Radiallager (46), welches das erste und das zweite Betätigungsrad in Zwangsverbindung bringt, außen trägt.

2. Motoranordnung nach dem vorhergegen Anspruch, wobei das erste Betätigungsrad (4) konzentrisch zu dem zweiten Betätigungsrad (6) ist, wobei die Zahnräder (4b, 6b) des ersten und des zweiten Betätigungsrads (4, 6) radial voneinander beabstandet sind, wobei optional das zweite Betätigungsrad in Bezug auf das erste Betätigungsrad (4) radial außen und durch das letztere getragen ist.

3. Motoranordnung nach einem der vorhergehenden Ansprüche, wobei das erste Betätigungsrad (4) radial, und optional axial, mittels wenigstens eines Radiallagers (24) mit der Achse (2) in Zwangsverbindung gebracht ist,
wobei das erste Betätigungsrad (4) in Bezug auf den Planetenträger (3) um die Achse (A) der Achse (2) drehbar ist.

4. Motoranordnung nach einem der vorhergehenden Ansprüche, wobei das erste Betätigungsrad (4) radial, und optional axial, mittels eines ersten und eines zweiten Radiallagers (24a, 24b) mit der Achse (2) in Zwangsverbindung gebracht ist,
wobei das erste Radiallager (24a) radial zwischen dem Kopplungsabschnitt (4a) des ersten Betätigungsrads (4) und der Achse (2) eingefügt ist,
wobei das zweite Radiallager (24b) radial zwischen dem Zahnrad (4b) des ersten Betätigungsrads (4) und der Achse (2) eingefügt ist.

5. Motoranordnung nach einem der vorhergehenden Ansprüche, wobei das erste Betätigungsrad (4) radial zwischen der Achse (2) und dem Planetenrad (5) eingefügt ist.

6. Motoranordnung nach einem der vorhergehenden Ansprüche, wobei der Kopplungsabschnitt (4a) des ersten Betätigungsrads (4) ein Außenzahnrad, optional mit geraden Zähnen, ist.

7. Motoranordnung nach einem der vorhergehenden Ansprüche, wobei das zweite Betätigungsrad (6) durch Drehung relativ zu dem Planetenträger (3) und zu dem ersten Betätigungsrad (4) bewegbar ist.

8. Motoranordnung nach einem der vorhergehenden Ansprüche, wobei das Radiallager (46) radial zwischen der Eingriffsfläche (4c) des ersten Betätigungsrads (4) und dem Kopplungsabschnitt (6a) des zweiten Betätigungsrads (6) eingefügt ist.

9. Motoranordnung nach einem der vorhergehenden Ansprüche, wobei der Kopplungsabschnitt (6a) des zweiten Betätigungsrads (6) ein Außenzahnrad, optional mit geraden Zähnen, ist.

10. Motoranordnung nach einem der vorhergehenden Ansprüche, wobei das Zahnrad (6b) des zweiten Betätigungsrads (6) ein Zahnrad mit einer Innenverzahnung umfasst, dessen Verzahnung der Achse (2) zugewandt ist.

11. Motoranordnung nach dem vorhergehenden Anspruch, wobei das Zahnrad (6b) des zweiten Betätigungsrads (6) einen Raum begrenzt, innerhalb welchem das wenigstens eine Planetenrad (5) und wenigstens ein Teil des Zahnrades (4b) des ersten Betätigungsrads (4) aufgenommen sind.

12. Motoranordnung nach einem der vorhergehenden Ansprüche, wobei das wenigstens eine Planetenrad (5) von dem Planetenträger (3) lateral vorsteht, welcher von dem ersten und von dem zweiten Betätigungsrad (4, 6) axial beabstandet ist.

13. Schienen-Wagon(100), umfassend:
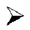 wenigstens eine Motoranordnung für eine Schienen-Achse (1) gemäß einem der vorhergehenden Ansprüche, wobei das Antriebsrad der Motoranordnung (1) dazu eingerichtet ist, gegen wenigstens eine Schienenstrecke anzuliegen,
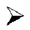 wenigstens einen Rahmen (101), welcher mit der Motoranordnung (1) in Eingriff steht und dazu eingerichtet ist, die Last- und Tagstruktur des Wagons zu definieren.

## Revendications

1. Ensemble moteur pour essieu ferroviaire (100) comprenant :
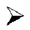 un essieu (2) comprenant au moins une roue d'entraînement (2a) configurée pour tourner conjointement audit essieu (2) autour d'un axe (A),
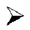 un support planétaire (3) ajusté sur l'essieu (2),
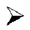 au moins un engrenage planétaire (5) denté porté par le support planétaire (3) et mobile par rotation par rapport à ce dernier au moins autour d'un axe respectif (B) distinct de l'axe de rotation (A) de l'essieu (2),
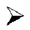 une première roue d'actionnement (4) contrainte à l'essieu (2) et mobile par rotation par rapport à ce dernier autour de l'axe de rotation (A) de l'essieu (2), ladite première roue d'actionnement (4) ayant :
∘ une portion d'accouplement (4a) pouvant être actionnée par un premier moteur (8) configuré pour faire tourner ladite première roue d'actionnement (4),
∘ une roue d'engrenage (4b) d'un seul tenant avec ladite portion d'accouplement (4a) et engagée par l'intermédiaire d'un maillage avec l'engrenage planétaire (5),
∘ une surface d'engagement (4c) interposée entre la portion d'accouplement (4a) et la roue d'engrenage (4b) de la première roue d'actionnement (4) selon un sens parallèle à l'axe (A) de l'essieu (2),
une seconde roue d'actionnement (6) - distincte de la première roue d'actionnement (4) - contrainte à l'essieu (2) et mobile par rotation par rapport à ce dernier autour de l'axe (A) de l'essieu (2),
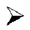 la seconde roue d'actionnement (6) ayant :
∘ une portion d'accouplement (6a) pouvant être actionnée par un second moteur (9) configuré pour faire tourner ladite seconde roue d'actionnement (6),
∘ une roue d'engrenage (6b) d'un seul tenant avec ladite portion d'accouplement (6a) de la seconde roue d'actionnement (6), et engagée par l'intermédiaire d'un maillage avec l'engrenage planétaire (5),
l'engrenage planétaire (5) étant radialement interposé entre les roues d'engrenage (4b, 6b) respectivement de la première et de la seconde roue d'actionnement (4, 6),
la seconde roue d'actionnement (6) étant contrainte à la première roue d'actionnement (4) à l'aide d'au moins un palier radial (46),
la surface d'engagement (4c) du premier élément d'actionnement (4) portant au plan externe ledit au moins un palier radial (46) contraignant la première et la seconde roue d'actionnement.

2. Ensemble moteur selon la revendication précédente, la première roue d'actionnement (4) étant concentrique vis-à-vis de la seconde roue d'actionnement (6), les roues d'engrenage (4b, 6b) de la première et de la seconde roue d'actionnement (4, 6) étant radialement espacées l'une de l'autre, éventuellement la seconde roue d'actionnement est radialement externe vis-à-vis de la première roue d'actionnement (4) et portée par cette dernière.

3. Ensemble moteur selon l'une quelconque des revendications précédentes, la première roue d'actionnement (4) étant radialement contrainte, et éventuellement axialement, vis-à-vis de l'essieu (2) à l'aide d'au moins un palier radial (24),
ladite première roue d'actionnement (4) pouvant tourner par rapport au support planétaire (3) autour de l'axe (A) de l'essieu (2).

4. Ensemble moteur selon l'une quelconque des revendications précédentes, la première roue d'actionnement (4) étant radialement contrainte, et éventuellement axialement, vis-à-vis de l'essieu (2) à l'aide d'un premier et d'un second palier radial (24a, 24b),
ledit premier palier radial (24a) étant radialement interposé entre la portion d'accouplement (4a) de la première roue d'actionnement (4) et l'essieu (2),
ledit second palier radial (24b) étant radialement interposé entre la roue d'engrenage (4b) de la première roue d'actionnement (4) et l'essieu (2).

5. Ensemble moteur selon l'une quelconque des revendications précédentes, la première roue d'actionnement (4) étant radialement interposée entre l'essieu (2) et l'engrenage planétaire (5).

6. Ensemble moteur selon l'une quelconque des revendications précédentes, la portion d'accouplement (4a) de la première roue d'actionnement (4) étant une roue d'engrenage externe, éventuellement avec des dents droites.

7. Ensemble moteur selon l'une quelconque des revendications précédentes, la seconde roue d'actionnement (6) étant mobile par rotation par rapport au support planétaire (3) et à la première roue d'actionnement (4).

8. Ensemble moteur selon l'une quelconque des revendications précédentes, ledit palier radial (46) étant radialement interposé entre la surface d'engagement (4c) de la première roue d'actionnement (4) et la portion d'accouplement (6a) de la seconde roue d'actionnement (6).

9. Ensemble moteur selon l'une quelconque des revendications précédentes, la portion d'accouplement (6a) de la seconde roue d'actionnement (6) étant une roue d'engrenage externe, éventuellement avec des dents droites.

10. Ensemble moteur selon l'une quelconque des revendications précédentes, la roue d'engrenage (6b) de la seconde roue d'actionnement (6) comprenant une roue d'engrenage avec une denture interne, dont la denture fait face à l'essieu (2).

11. Ensemble moteur selon la revendication précédente, la roue d'engrenage (6b) de la seconde roue d'actionnement (6) délimitant un espace à l'intérieur duquel le au moins un engrenage planétaire (5) et au moins une partie de la roue d'engrenage (4b) de la première roue d'actionnement (4) sont logés.

12. Ensemble moteur selon l'une quelconque des revendications précédentes, le au moins un engrenage planétaire (5) se projetant latéralement depuis le support planétaire (3) qui est axialement espacé de la première et de la seconde roue d'actionnement (4, 6).

13. Wagon ferroviaire (100) comprenant :
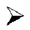 au moins un ensemble moteur (1) pour essieu ferroviaire selon l'une quelconque des revendications précédentes, la roue d'entraînement de l'ensemble moteur (1) étant configurée pour venir en butée contre au moins une voie ferrée,
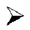 au moins un châssis (101) engagé avec l'ensemble moteur (1) adapté pour définir la charge et la structure de support du wagon.
